(19) Europäisches Patentamt
European Patent Office
Office européen des brevets

(11) EP 1 040 396 B1

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(21) Anmeldenummer: **98955842.4**

(22) Anmeldetag: **08.12.1998**

(51) Int Cl.7: **G05B 19/41**, G05B 19/4099

(86) Internationale Anmeldenummer:
**PCT/IB98/01949**

(87) Internationale Veröffentlichungsnummer:
**WO 99/032949 (01.07.1999 Gazette 1999/26)**

(54) **VERFAHREN ZUM ABTRAGENDEN BEARBEITEN VON WERKSTÜCKEN**

METHOD FOR PROCESSING WORK PIECES BY REMOVING MATERIAL

PROCEDE D'USINAGE DE PIECES PAR ENLEVEMENT DE MATIERE

(84) Benannte Vertragsstaaten:
**AT BE CH DE DK ES FR GB GR IE IT LI LU NL PT SE**

(30) Priorität: **22.12.1997 CH 294497**

(43) Veröffentlichungstag der Anmeldung:
**04.10.2000 Patentblatt 2000/40**

(73) Patentinhaber: **StarragHeckert AG**
**9404 Rorschacherberg (CH)**

(72) Erfinder:
- **ENGELI, Max**
  **CH-8135 Langnau am Albis (CH)**
- **WALDVOGEL, Jörg**
  **Ch-8302 Kloten (CH)**
- **SCHNIDER, Thomas**
  **CH-8047 Zürich (CH)**

(74) Vertreter: **Blum, Rudolf Emil Ernst**
**c/o E. Blum & Co**
**Patentanwälte**
**Vorderberg 11**
**8044 Zürich (CH)**

(56) Entgegenhaltungen:

| | |
|---|---|
| **EP-A- 0 798 616** | **US-A- 5 033 005** |
| **US-A- 5 257 203** | **US-A- 5 363 309** |

EP 1 040 396 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Technisches Gebiet

Die Erfindung bezieht sich auf ein Verfahren zum abtragenden Bearbeiten gemäss Oberbegriff der unabhängigen Patentansprüche.

Solche Verfahren dienen z. B. zur Erzeugung fünfachsiger Werkzeugverfahrwege in CAD (Computer Aided Design)/ CAM(Computer Aided Manufacturing)-Systemen für die Bearbeitung von Werkstücken mit Freiformflächen.

Stand der Technik

Alle bekannten Anschmiegemethoden gehen von vordefinierten Berührbahnen des Werkzeuges auf dem Werkstück aus. Auf diverse Arten wird die Position und Orientierung bzw. der Sturzwinkel (Neigungswinkel der Werkzeugachse in Bewegungsrichtung des Werkzeuges relativ zur Freiformflächennormale) und der Schwenkwinkel (Neigungswinkel der Werkzeugachse in der auf die Bewegungsrichtung des Werkzeuges senkrecht stehenden Richtung) für ausgewählte Punkte auf der Berührbahn bestimmt. Die derzeit beste Methode (Jean-Pierre Kruth und Paul Klewais, Optimization and Dynamic Adaptation of the Cutter Inclination during Five-Axis Milling of Sculptured Surfaces, Annals of the CIRP, 1994) arbeitet zur Bestimmung von Sturz- und Schwenkwinkel mit Projektionen quadratischer Approximationen des Werkstückes und des Werkzeuges. Für konstante Schwenkwinkel wird eine quartische Gleichung zur Berechnung des kritischen Sturzwinkels (Sturzwinkel, bei dem gerade kein Unterschnitt bei den Approximationen auftritt) hergeleitet. Auch bei diesem Verfahren ist trotz der beschränkten Genauigkeit (Kollisionsgefahr) die Bearbeitung jedoch immer noch aufwendig.

EP 798 816 A2 beschreibt ein Verfahren zum abtragenden Bearbeiten der Oberfläche eines Werkstücks, bei welchem das Werkzeug in Bahnen über das Werkstück geführt wird. Material, das dabei in den Wirkbereich des Werkzeugs gerät, wird abgetragen um eine gewünschte Soll-Oberfläche zu erzeugen. Die Pfade, entlang denen das Werkzeug über das Werkstück geführt wird, sind dabei so eng zu wählen, dass eine gegebene Fehlertoleranz bei der Bearbeitung nicht überschritten wird.

US 5 363 309 offenbart eine Berechnung des Wirkbereichs eines rotationssymmetrischen Werkzeugs. Derartige Berechnungen können verwendet werden, um den Abstand des Werkzeugs von der Soll-Oberfläche zu bestimmen.

Um die Bearbeitungsgeschwindigkeit zu verbessern wurde vorgeschlagen, die Bewegungsbahnen des Werkzeugs abhängig von der Form der Solloberfläche festzulegen. Ein derartiges Verfahren wird in US 5 033 005 beschrieben.

Darstellung der Erfindung

Es stellt sich deshalb die Aufgabe, ein Verfahren der eingangs genannten Art bereitzustellen, das die Nachteile bekannter Verfahren zumindest teilweise vermeidet. Insbesondere soll eine schnelle und somit kostengünstige Bearbeitung ermöglicht werden. Diese Aufgabe wird vom Gegenstand der unabhängigen Ansprüche gelöst.

Im Gegensatz zu bekannten Verfahren wird also nicht eine lokale Anpassung im Bereich des Berührungspunktes, sondern eine nicht-lokale Optimierung einer Grösse, z.B. der Breite, des Toleranzbereichs durchgeführt, wodurch sich die Zahl der Bearbeitungsbahnen reduzieren und die Bearbeitung rationalisieren lässt.

Vorzugsweise wird der Sturz- und Schwenkwinkel derart gewählt, dass sich das Werkzeug immer oberhalb der Soll-Oberfläche befindet. Dadurch kann mit manueller Nachbearbeitung die Oberfläche besser ihrem Sollverlauf angepasst werden. Beim bekannten Verfahren von Kruth und Klewais lässt sich anhand der exakten Beschreibungen von Werkzeug- und Werkstückfläche zeigen, dass das Werkzeug das Werkstück verletzen kann (insbesondere beim Einsatz grosser Werkzeuge).

In einer ebenfalls bevorzugten Ausführung werden die Bearbeitungsbahnen so gewählt, dass für jeden Punkt auf der Soll-Oberfläche der Toleranzbereich und die Richtung des maximalen Toleranzbereich-Durchmessers ermittelt wird. Die Bearbeitungsbahnen werden im wesentlichen senkrecht zu diesem Durchmesser gewählt, wodurch die Zahl der Bearbeitungsbahnen reduziert werden kann.

In einer weiteren Ausführung der Erfindung wird für einen Punkt auf der Soll-Oberfläche eine Anschmiegekurve bestimmt. Diese entspricht in ihren Ableitungen, insbesondere in ihrer Krümmung, Krümmungsableitung und Torsion im gegebenen Punkt einer Wirkkurve, die den Wirkbereich des Werkzeugs beschreibt (gebildet durch alle Punkte, die minimalen Abstand zur Solloberfläche haben). Wie im folgenden gezeigt wird, kann mit diesem Verfahren in rechnerisch einfacher Weise eine gut angepasste Stellung des Werkzeugs ermittelt werden.

Beispiele von Bearbeitungsverfahren, bei denen das vorliegende Verfahren eingesetzt werden kann, sind fünfachsiges Fräsen, Schleifen, Erodieren, Drehen. Beispiele für Werkstücke sind Aussenhautteile für Flugzeuge, Automobile oder Schiffe, Strömungsteile wie z.B. Turbinenschaufeln, Designerteile, usw.

Kurze Beschreibung der Zeichnungen

Weitere Vorteile und Anwendungen der Erfindung ergeben sich aus den abhängigen Ansprüchen und aus der nun folgenden Beschreibung anhand der Figuren. Dabei zeigen:

- Fig. 1 ein rotationssymmetrisches Werkzeug mit Torussegment, das auf das Werkstück wirkt (der Mittelkreis *K* des Torus hat den Radius *a*, der kleine Torusradius beträgt *b*);
- Fig. 2 Beispiele verschiedener Werkzeuge: Zylinderwerkzeug (A), Toruswerkzeug (B), Kugelwerkzeug (C);
- Fig. 3 Hermite-Methode: der Kreis $\tilde{K}$ soll um einen Winkel $\theta$ um $e_2$ gedreht werden, so dass der Tangentenvektor $\tilde{t}_0$ senkrecht auf die Normale $n_0$ zu liegen kommt - die Lösung ist der Kreis *K*;
- Fig. 4a Hermite-Methode: Freiformfläche $\psi$ mit zwei Anschmiegepunkten $P_0$ bzw. $P_2$, angeschmiegtem Torusmittelkreis *K* gegebener grosser Halbachse *a*;
- Fig. 4b Darstellung der Distanzfunktion zwischen den Anschmiegepunkten von Fig. 4a;
- Fig. 5a Hermite-Chebyshev-Methode: Freiformfläche $\psi$ mit zwei Anschmiegepunkten $P_0$ bzw. $P_2$, angeschmiegtem Torusmittelkreis *K*, und Punkten $P_l$ und $P_r$, wo *stol* überschritten wird;
- Fig. 5b Darstellung der Distanzfunktion der Anordnung von Fig. 5a;
- Fig. 6a Taylor-Methode: Das lokal optimale Anschmiegen von $\tau$ an $\psi$ ist äquivalent dem lokal optimalen Anschmiegen von *K* an ${}_b\psi$;.
- Fig. 6b Distanzfunktion zu Fig. 6a bis zu den Punkten $P_l$ und $P_r$, wo *stol* überschritten wird;
- Fig. 7 Taylor-Methode: Freiformfläche $\psi$ mit Flächenkurve *c*, für deren Taylorentwicklung im Anschmiegepunkt $P_0 = c_0$ die ersten drei Terme mit der Taylorentwicklung eines Kreises übereinstimmen;
- Fig. 8 Lösungs-Quadrupel für hyperbolischen (links) und elliptischen (rechts) Punkt auf der Torusoberfläche (beim rechten Lösungsquadrupel ist die vierte Lösung durch die Torusfläche verdeckt);
- Fig. 9 Freiformfläche $\psi$, mit Anschmiege-Vf *A* für ein Toruswerkzeug - Die kurzen Liniensegmente beginnen im Berührpunkt auf $\psi$, verlaufen in Normalenrichtung und enden im Berührpunkt auf ${}_b\psi$, die langen Liniensegmente starten im Berührpunkt auf ${}_b\psi$ und enden im Mittelpunkt des Torus;
- Fig. 10 Abstandsfeld *D* auf $\psi$ für das Anschmiege-Vf *A* aus Fig. 9;
- Fig. 11 Freiformfläche $\psi$ mit Berührbahn

  $$B(s) := \psi(u(s), v(s)),$$

  Anschmiege-Vf *A* entlang *B* und Abstands-Vf *D* entlang *B*;
- Fig. 12 Zwei verschiedene Möglichkeiten der rechnerischen Abwicklung bei der Abarbeitung von Werkzeugverfahranweisungen mit lokal optimaler Schmiegung (die Abkürzungen WKS für Werkstückkoordinatensystem und MKS für Maschinenkoordinatensystem werden verwendet; die Algorithmen zum optimalen Anschmiegen können sowohl im CAM-System als auch in der Steuerung angewandt werden); und
- Fig. 13 Reduktion des Torus auf seinen Mittelkreis bei gleichzeitiger Bildung von Parallelflächen.

Wege zur Ausführung der Erfindung

In der folgenden Diskussion wird das vorliegende Problem zuerst aus mathematischer Sicht aufgearbeitet. Sodann werden verschiedene Ausführungsbeispiele des erfindungsgemässen Verfahrens vorgestellt.

**Werkzeug**

Betrachtet werden rotationssymmetrische Werkzeuge, bei denen ein Torussegment $\tau$ auf das Werkstück wirkt, wie dies in Fig. 1 dargestellt wird. Dabei bezeichnet das Torussegment $\tau$ den Wirkbereich des Werkzeugs, d.h. denjenigen Bereich, innerhalb dem Material des Werkstücks abgetragen wird.
Beim Werkzeug kann es sich dabei um irgend ein Werkzeug zur abtragenden Bearbeitung handeln, wie z. B. um einen rotierenden Fräskopf oder um die Werkzeugelektrode eines Geräts zur elektroerosiven Bearbeitung.
Der grosse Radius des Torus von $\tau$ wird mit *a*, der kleine Radius mit *b* und der Torusmittelkreis mit *K* bezeichnet. Eine mögliche Parametrisierung für den Torus ist

$$\tau(t,s) := \begin{pmatrix} (a + b * cos(t)) * cos(s) \\ (a + b * cos(t)) * sin(s) \\ b * sin(t) \end{pmatrix}.$$

Figur 2 zeigt typische Beispiele: Zylinderwerkzeuge ($a > 0$, $b = 0$), Toruswerkzeuge ($a > b > 0$) und Kugelwerkzeuge ($a = 0$, $b > 0$).

Mit Kugelwerkzeugen kann die lokale Anschmiegequalität nicht verbessert werden, da ein Freiheitsgrad fehlt. Diese sollen deshalb hier nicht weiter diskutiert werden.

**Werkstück**

Die Notationen $<.,.>$ für das euklidische Skalarprodukt, $\|.\|$ für die euklidische Norm, $. \times .$ für das Vektorprodukt und $d(P,Q) := \|P-Q\|$ für den euklidischen Abstand zweier Punkte $P$, $Q$ werden benutzt. Sei

$$\psi(u,v) \in C^4\left([0,1]^2, \Re^3\right)$$

eine Freiformfläche eines Werkstückes, d.h. die gewünschte Soll-Oberfläche nach der Bearbeitung. Beispiele in der Praxis verwendeter mathematischer Beschreibungsformen für Freiformflächen sind Bézierflächen, rationale Bézierflächen, B-Splines und NURBS (Non uniform rational B-Splines). Für partielle Ableitungen wird die Bezeichnung $\psi_\sigma$ mit $\sigma \in \{u,v,uu,uv,vv,uuu,uuv,uvv,vvv\}$ verwendet. Mit Hilfe des Normalenvektors $n := \psi_u \times \psi_v$ können d-Offset- bzw. $d$-Parallelflächen beschrieben werden:

$$_d\psi := \psi + d\,\frac{n}{\|n\|}.$$

**Optimales Anschmiegen**

Im folgenden wird diskutiert, wie das Werkzeug gegenüber dem Werkstück in jedem Punkt orientiert werden soll, so dass sich eine bestmögliche Anschmiegung an die Freiformfläche (Soll-Oberfläche) ergibt.

Das lokal optimale Anschmiegen von Werkzeugen der oben beschriebenen Art auf Freiformflächen kann mit nichtlinearen Gleichungssystemen formuliert werden. Dabei wird zwischen den drei Anschmiegemethoden, die hier als *Taylor-, Hermite-* und *Hermite-Chebyshev-Methode* bezeichnet werden, unterschieden. Die theoretisch bestmögliche Anschmiegung wird mit der Hermite-Chebyshev-Methode erreicht. Bestmögliche Anschmiegung bedeutet, dass bei Vorgabe eines Toleranzbandes (Toleranzbereichs) normal zur Freiformfläche (in der Regel liegt das Toleranzband ganz oberhalb der Freiformfläche) die Hermite-Chebyshev-Methode den grössten Bereich auf der Fläche liefert, in dem das Toleranzband nicht überschritten wird. Das Berechnungsverfahren für das Anschmiegen liefert die Hermite-Methode. Bei der Hermite-Methode resultieren ungefähr 30% schmalere Bahnen. Die weniger rechenaufwendige Taylor-Methode besitzt ungefähr gleich breite Bahnen wie die Hermite-Methode und kann als Startwertlieferant für die Hermite-Methode eingesetzt werden.

Die Gleichungssysteme werden bei allen drei Anschmiegemethoden für Zylinderwerkzeuge formuliert. Wenn der Torus zum Torusmittelkreis schrumpft und gleichzeitig zur Freiformfläche Parallelflächen berechnet werden, resultieren immer gleiche Abstandsverhältnisse zwischen Torus (mit Grenzwert Torusmittelkreis) und Parallelfläche (vgl. Fig. 13).

Mathematisch ausgedrückt wird ein Kreis nach verschiedenen Kriterien lokal optimal auf eine Freiformfläche gestellt. Für Werkzeuge mit $b > 0$ werden die $b$-Parallelflächen $_b\psi$ und $_{-b}\psi$ verwendet, und der Torusmittelkreis $K$ wird mit den Methoden für Zylinderwerkzeuge angeschmiegt.

In Fig. 6a ist am Beispiel der Taylor-Methode graphisch die Tatsache wiedergegeben, dass das lokal optimale Anschmiegen von $\tau$ an $\psi$ äquivalent dem lokal optimalen Anschmiegen von $K$ an Parallelflächen $_b\psi$ bzw. $_{-b}\psi$ ist. Diese Tatsache gilt für alle drei Anschmiegemethoden. Dies bedeutet insbesondere, dass je bei allen drei Anschmiegemethoden die Anschmiegegüte zwischen $\tau$ und $\psi$ bzw. zwischen $K$ und $_b\psi$ (oder $_{-b}\psi$) genau gleich ist. Diese Aussage wird dazu benutzt, um eine sehr schnelle Abschätzung für den Toleranzbereich des Werkzeuges (Bereich, in dem das Werkzeug weniger als eine vorgegebene Grösse *stol* von der Werkstückfläche abweicht) zu bekommen.

*Hermite-Methode*

Bei der Hermite-Methode werden zwei nahe beieinanderliegende Anschmiegepunkte $P_0$ und $P_2$ verwendet, bei denen das Werkzeug die Freiformfläche $\psi$ berühren soll (Fig. 4a, 4b). Das Hermite-Anschmiegeproblem wird im vorliegenden Fall für ein Zylinderwerkzeug, d.h. für einen Kreis, gelöst. (Es wäre möglich, anstelle eines Kreises eine beliebige Kurve - z.B. eine Ellipse - zu nehmen. Die Ausdrücke (1) - (4) müssten entsprechend angepasst werden). Der Kreis soll die Freiformfläche in den beiden Anschmiegepunkten $P_0$ und $P_2$ berühren.

Zur Herleitung des Gleichungssystems werden zwei nahe beieinanderliegende Punkte $P_0 := \psi(u_0,v_0)$, $P_2 := \psi(u_2,v_2)$ betrachtet. Die zugehörigen Normalen werden mit $n_0$, $n_2$, der Verbindungsvektor $P_2 - P_0$ mit $v$ und dessen Länge mit $2c$ bezeichnet (Fig. 3). Die Vektoren $n_0$, $n_2$ und $v$ werden typischerweise nicht in derselben Ebene liegen, und zudem werden $n_0$ und $n_2$ nicht senkrecht auf $v$ stehen.

Zur Lösung des Hermite-Anschmiegeproblems wird das Koordinatensystem mit den Basisvektoren $e_2 := v/\|v\|$,

$$e_1 := \frac{e_2 \times n_0}{e_2 \times n_0}$$

und $e_3 := e_1 \times e_2$ eingeführt.

Grundidee ist, einen in der $e_2,e_3$-Ebene liegenden Kreis $\tilde{K}$ gegebenen Durchmessers 2a durch $P_0$ und $P_2$ so weit um $e_2$ zu drehen, dass der Tangentenvektor $\tilde{t}_0$ in $P_0$ senkrecht auf $n_0$ zu liegen kommt. Der Tangentenvektor $\tilde{t}_0$ besitzt im $e_1$, $e_2$, $e_3$-Koordinatensystem die Komponenten $(0,-h,c)^T$, wobei $h := \sqrt{a^2-c^2}$ und $n_0$ die Koordinaten $(0,<n_o,e_2>,<n_0,e_3>)^T$ hat. Die Gleichung

$$< \begin{pmatrix} cos(\theta) & 0 & -sin(\theta) \\ 0 & 1 & 0 \\ sin(\theta) & 0 & cos(\theta) \end{pmatrix} \begin{pmatrix} 0 \\ -h \\ c \end{pmatrix}, \begin{pmatrix} 0 \\ < n_0,e_2 > \\ < n_0,e_3 > \end{pmatrix} >= 0 \qquad (1)$$

bestimmt nun den Kosinus des Drehwinkels $\theta$,

$$cos(\theta) = \frac{h < n_0,e_2 >}{c < n_0,e_3 >}, \qquad (2)$$

und die Tangentenvektoren von $K$ in $P_0$ und $P_2$ sind

$$t_0 = -c * sin(\theta)e_1 - he_2 + c\, cos(\theta)e_3 \qquad (3)$$

$$t_2 = -c * sin(\theta)e_1 + he_2 + c\, cos(\theta)e_3 \qquad (4)$$

Also ist aus $P_0$, $P_2$ und $n_0$ die Position des Kreises $K$ bestimmt worden. Der Kreis $K$ wird im Allgemeinen nicht senkrecht auf $n_2$ stehen: $<n_2,t_2> \neq 0$.

Das Problem ist daher, dass die Anschmiegung nach der Hermite-Methode nicht mit zwei beliebig gewählten Punkten durchgeführt werden kann. Die relative Lage von $P_0$, $P_2$ und der Normalenvektoren $n_0$, $n_2$ in diesen Punkten ist massgebend dafür, ob eine Lösung existiert. Nachfolgend wird eine Vorgehensweise empfohlen, mit der solche Punktepaare gefunden werden können.

Gegeben sei ein Punkt $P_0 := \psi(u_0,v_0)$ auf $\psi$. In einer Umgebung von $P_0$ werden Punkte $P_2 := \psi(u_0 + \Delta u, v_0 + \Delta v)$ gesucht, für die eine Anschmiegung nach der Hermite-Methode existiert. Diese Umgebung wird vorerst einmal beliebig gewählt. Zum Beispiel ein Kreis um $(u_0,v_0)$ in der Parameterebene

$$\Delta u^2 + \Delta v^2 = r^2. \qquad (5)$$

Mit obiger Konstruktion wird für $P_0$, $P_2$ und $n_0$ die Lage des Schmiegekreises und damit die Tangente $t_2$ berechnet. Für die Tangente $t_2$ wird gefordert, dass sie senkrecht auf $n_2$ steht:

$$<n_2(\Delta u,\Delta v),t_2(\Delta u,\Delta v)>=0. \qquad (6)$$

Damit ist mit (5) und (6) ein Gleichungssystem für das Finden von Punkten $P_2$ beschrieben. Dieses wird am besten dadurch gelöst, dass der Kreis (5) parametrisiert und in (6) eingesetzt wird. Die entstehende Gleichung kann mit einem Sekantenverfahren gelöst werden. Dadurch ist $\tau$ relativ zu $\psi$ positioniert worden:

$$\Omega\tau(t,s)+v,$$

wobei $\Omega$ eine Orientierung und $v$ eine Position ist. Es resultiert ein Lösungsquadrupel (zwei Lösungen für die Bearbeitung der Aussenfläche und die zwei anderen Lösungen für die Bearbeitung der Innenfläche). Besonders gut zu lösen und zu sehen ist das für den Spezialfall der Torusflächen (vgl. Bsp. bei Taylor-Methode, Fig. 8).

Beim nach der Hermite-Methode angeschmiegten Werkzeug ist die Distanzfunktion zwischen $\tau$ und $\psi$ innerhalb der Anschmiegepunkte $P_0 = \tau(t_0,s_0)$ und $P_2 = \tau(t_2,s_0)$ von der Form (vgl. Fig. 4b)

$$d(t)=k\left(\left(t-t_o-\frac{t_2-t_0}{2}\right)^2-\left(\frac{t_2-t_0}{2}\right)^2\right)^2+O\left(t^5\right) \qquad (7)$$

Diese Funktion erfüllt $d(t_0)=d'(t_0)=d(t_2)=d'(t_2)=0$ und nimmt in $(t_2+t_0)/2$ ein Maximum an:

$$k\left(\frac{t_2 - t_0}{2}\right)^4. \qquad (8)$$

Um ausgehend von $P_0$ denjenigen Punkt $P_2$ auf $\psi$ zu finden, für den das Maximum der Distanz innerhalb von $P_0$ und $P_2$ gleich *stol* ist, werden die folgenden Schritte iterativ wiederholt, bis die gewünschte Genauigkeit erreicht ist:

Wie oben beschrieben wird $P_2$ bestimmt. Zur Distanzmessung wird auf $\tau$ der Berührkreis $C(t):=\Omega\tau(t,s_0)+v$ zu $\psi$ herangezogen. Die maximale Distanz zwischen $C$ und $\psi$ wird durch Lösen von

$$d^* = max_{t,u,v}\, d\left(C(t),\psi(u,v)\right) \qquad (9)$$

gefunden. Mit der Aussage zur Anschmiegequalität kann die Konstante $k$ berechnet werden:

$$k = \frac{d^*}{(t^* - t_0)^4)}. \qquad (10)$$

$$k=\frac{d^*}{\left(t^*-t_0\right)^4}. \qquad (10)$$

Daraus wird der Parameter $\hat{t}_2$ bestimmt, für den die Distanz ungefähr *stol* ist:

$$\hat{t}_2 = t_0 + 2\left(\frac{stol}{k}\right)^{1/4}. \qquad (11)$$

Der Faktor

$$f:=\left(\hat{t}_2-t_0\right)\Big/\left(t_2-t_0\right)$$

wird auf den Radius *r* in (5) angewandt,

$$\Delta u^2 + \Delta v^2 = (fr)^2 \tag{12}$$

und das Problem mit (12), (6) gelöst. Dieser gesamte Vorgang wird iteriert, bis die verlangte Genauigkeit erreicht wird.

*Hermite-Chebyshev-Methode*

Für die Hermite-Chebyshev-Methode wird das Rechenverfahren zum optimalen Anschmiegen von der Hermite-Methode benutzt. Das heisst, dass auch die Distanzfunktion *d* genau gleich ist. Die Einsatzbreite des Werkzeuges kann aber erhöht werden, indem die Bereiche, wo *Stol* noch nicht überschritten wird (unterhalb von $P_0$ bis $P_l$ und oberhalb von $P_2$ bis $P_r$, vgl. Fig. 5a, 5b) hinzugenommen werden. Eine kurze Berechnung zeigt, dass *d(t)* approximativ an den Stellen

$$t_l = t_0 - \left(\sqrt{2}-1\right)\frac{t_2-t_0}{2} \tag{13}$$

$$t_r = t_2 + \left(\sqrt{2}-1\right)\frac{t_2-t_0}{2} \tag{14}$$

das innerhalb von $P_0$ und $P_2$ angenommene Maximum

$$k((t_2 - t_0)/2)^4$$

hat. Dadurch wird die Einsatzbreite des Hermite-Chebyshev-Ansatzes im Vergleich zum Hermite-Ansatz ungefähr um den Faktor $\sqrt{2}$ grösser, d.h. die Anzahl der Werkzeugbahnen wird um ca. 30% reduziert. Bei der Hermite- und der Hermite/Chebyshev-Methode ist die Gefahr von Kollisionen in der Nähe des Berührpunktes kleiner als bei der Taylor-Methode.

Für eine genauere Berechnung ist es auch denkbar, die Position der Punkte $P_l$ und $P_r$ für jedes Berührungspunkte-Paar $P_0$, $P_2$ numerisch direkt zu bestimmen, d.h. nicht über die Näherungen (13) und (14). Daraus kann der Abstand zwischen $P_l$ und $P_r$ errechnet und sodann optimiert werden.

*Taylor-Methode*

Im Gegensatz zu den beiden vorherigen Anschmiegemethoden wird bei der Taylor-Methode nur *ein* Anschmiegepunkt $P_0 = c_0 := \psi(u_0, v_0)$ betrachtet. In $P_0$ soll ein Kreis lokal optimal nach Taylor auf die Fläche gestellt werden. Grundidee zur Lösung dieses Problems ist, die Taylorentwicklung

$$c(t) := \psi\left(u(t), v(t)\right)$$

einer durch $P_0$ verlaufenden und in $\psi$ enthaltenen Anschmiegekurve zu suchen, die im Entwicklungspunkt $c_0$ dem Kreis möglichst ähnlich ist (vgl. Fig. 7). Der Kreis beschreibt dabei zumindest lokal den Wirkbereich des Werkzeugs und wird als Wirkkurve bezeichnet.

Also soll die in $c_0$ nach der Bogenlänge parametrisierte Taylorentwicklung (15)-(17) dort dieselbe Krümmung

(18), Krümmungsableitung (19) und Torsion (20) wie der Kreis aufweisen (mit dem Gleichungssystem (15)-(20) ist es möglich, beliebige Wirkkurven mit gegebener lokaler Torsion und Krümmungsableitung anzuschmiegen; z.B. eine Ellipse bei vorgegebenem Anschmiegepunkt auf der Ellipse):

$$<\dot{c}_0, \dot{c}_0> = 1 \quad (15)$$

$$<\dot{c}_0, \ddot{c}_0> = 0 \quad (16)$$

$$<\dot{c}_0, \dddot{c}_0> + <\ddot{c}_0, \ddot{c}_0> = 0 \quad (17)$$

$$<\ddot{c}_0, \ddot{c}_0> = 1/a^2 \quad (18)$$

$$<\ddot{c}_0, \dddot{c}_0> = 0 \quad (19)$$

$$<\dot{c}_0 \times \ddot{c}_0, \dddot{c}_0> = 0 \quad (20)$$

Für den Kreis kann mit einem Trick (15) - (20) mit sechs Gleichungen und Unbekannten auf ein nichtlineares Gleichungssystem mit vier Gleichungen und Unbekannten reduziert werden. Zur Abkürzung wird von nun an die Notation $\psi_\sigma$ für $\psi_\sigma(u_0, v_0)$ verwendet. Aus (17), (19) und (20) geht hervor, dass $\dddot{c}_0$ antiparallel zu $\dot{c}_0$ sein muss. Da $c_0$ eine Linearkombination von $\psi_u$ und $\psi_v$ ist und $n_0 := n(u_0, v_0)$ auf diesen beiden Vektoren senkrecht steht, muss auch $\dddot{c}_0$ senkrecht auf $n_0$ sein. Die Betrachtung einer in $c_0$ nach Bogenlänge parametrisierten Taylorentwicklung

$$\dot{c}_0 = \Psi_u \dot{u} + \Psi_v \dot{v}$$

$$\ddot{c}_0 = \Psi_u \ddot{u} + \Psi_v \ddot{v} + \Psi_{uu} \dot{u}^2 + 2\Psi_{uv} \dot{u}\dot{v} + \Psi_{vv} \dot{v}^2$$

$$\dddot{c}_0 = \Psi_u \dddot{u} + \Psi_v \dddot{v} + 3\Psi_{uu} \dot{u}\ddot{u} + 3\Psi_{uv} (\ddot{u}\dot{v} + \dot{u}\ddot{v}) + 3\Psi_{vv} \dot{v}\ddot{v} + \Psi_{uuu} \dot{u}^3 + 3\Psi_{uuv} \dot{u}^2 \dot{v} + 3\Psi_{uvv} \dot{u}\dot{v}^2 + \Psi_{vvv} \dot{v}^3$$

zeigt, dass im reduzierten Gleichungssystem

$$<\dot{c}_0, \dot{c}_0> = 1 \quad (21)$$

$$<\dot{c}_0, \ddot{c}_0> = 0 \quad (22)$$

$$<\ddot{c}_0, \ddot{c}_0> = 1/a^2 \quad (23)$$

$$<\dddot{c}_0, \ddot{n}_0> = 0 \qquad (24)$$

die Terme mit $\dddot{u}$ und $\dddot{v}$ in (24) herausfallen. Dies bedeutet, dass die Lage und Orientierung eines optimal angeschmiegten Kreises durch Berechnung der Koeffizienten $\dot{u}$, $\dot{v}$, $\ddot{u}$, $\ddot{v}$ der gesuchten Kurvenparametrisierung in der $(u,v)$-Parameterebene bestimmt ist. Ausgeschrieben lautet das Gleichungssystem unter Benutzung der Abkürzungen $g_{\sigma,\mu}:=<\psi_\sigma, \psi_\mu>$:

$$<\dot{c}_0, \dot{c}_0> = g_{u,u}\dot{u}^2 + 2g_{u,v}\dot{u}\dot{v} + g_{v,v}\dot{v}^2 \qquad (25)$$

$$<\dot{c}_0, \ddot{c}_0> = g_{u,uu}\dot{u}^3 + (2g_{u,uv} + g_{v,uu})\dot{u}^2\dot{v} + (2g_{v,uv} + g_{u,vv})\dot{u}\dot{v}^2 + g_{v,vv}\dot{v}^3$$
$$g_{u,u}\dot{u}\ddot{u} + g_{u,v}\dot{u}\ddot{v} + g_{u,v}\ddot{u}\dot{v} + g_{v,v}\dot{v}\ddot{v}$$

$$<\ddot{c}_0, \ddot{c}_0> = g_{uu,uu}\dot{u}^4 + 4g_{uu,uv}\dot{u}^3\dot{v} + 2(g_{uu,vv} + 2g_{uv,uv})\dot{u}^2\dot{v}^2 + 4g_{uv,vv}\dot{u}\dot{v}^3$$
$$+ g_{vv,vv}\dot{v}^4 + 2g_{u,uu}\dot{u}^2\ddot{u} + 4g_{u,uv}\dot{u}\dot{v}\ddot{u} + 2g_{u,vv}\dot{v}^2\ddot{u} + 2g_{v,uu}\dot{u}^2\ddot{v}$$
$$+ 4g_{v,uv}\dot{u}\dot{v}\ddot{v} + 2g_{v,vv}\dot{v}^2\ddot{v} + g_{u,u}\ddot{u}^2 + 2g_{u,v}\ddot{u}\ddot{v} + g_{v,v}\ddot{v}^2$$

$$<\dddot{c}_0, \ddot{n}_0> = g_{uuu,n}\dot{u}^3 + 3g_{uuv,n}\dot{u}^2\dot{v} + 3g_{uvv,n}\dot{u}\dot{v}^2 + g_{vvv,n}\dot{v}^3$$
$$3g_{uu,n}\dot{u}\ddot{u} + 3g_{uv,n}\dot{u}\ddot{v} + 3g_{uv,n}\dot{v}\ddot{u} + 3g_{vv,n}\dot{v}\ddot{v}$$

Dieses nichtlineare algebraische Gleichungssystem für die Unbekannten $\dot{u}$, $\dot{v}$, $\ddot{u}$ und $\ddot{v}$ kann mit einem Newton-Verfahren gelöst werden. Auch hier resultieren Lösungs-Quadrupel. Die Freiformfläche $\psi$ lokal approximierende Torusflächen können herangezogen werden, um Startwerte für die Lösungsfindung beim Gleichungssystem (25) zu eruieren.

Für ein nach der Taylor-Methode angeschmiegtes Werkzeug ist in der Umgebung des Anschmiegepunktes $P_0 = \tau(t_0,s_0)$ die Abstandsfunktion $d$ zwischen $\tau$ und $\psi$ von der Form (vgl. Fig. 6b):

$$d(t) = k(t - t_0)^4 + O(t^5). \qquad (26)$$

Um die einseitige Einsatzbreite des Werkzeuges zu berechnen, wird für einen in der Nähe von $P_0$ liegenden Kleinkreis

$$C(s) := \Omega\tau(t^*, s) + v$$

des Torus der Abstand $d^*$ auf $\psi$ durch Lösen von

$$d^* = max_{t,u,v}\, d(C(t), \psi(u,v))$$

bestimmt. Aufgrund der Aussage zur Anschmiegequalität kann die Konstante $k$ berechnet werden:

$$k = \frac{d^*}{(t^* - t_0)^4}$$

Daraus wird die Stelle eruiert, an der die Distanz approximativ *stol* ist

$$t_r = t_0 + \left(\frac{stol}{k}\right)^{1/4}$$

Auch dieses Verfahren wird iteriert, bis die verlangte Genauigkeit erreicht ist. Die Bestimmung von $t_l$ wird genau gleich durchgeführt. Es gilt insbesondere zu beachten, dass links- und rechtsseitige Einsatzbreite im allgemeinen Fall nicht gleich gross sind.

Bei allen drei vorgängig beschriebenen Anschmiegemethoden resultieren auf $\psi$ verschiedene Lösungen von Vektorfeldern (Vf) für die Position und Orientierung des Werkzeuges (*Anschmiege-Vf A,* vgl. Fig. 9). Für die Beschreibung der Bahnabstände wird das *Abstandsfeld D* benutzt (vgl. Fig. 10). Dieses besteht aus einer Richtung auf $\psi$, einer Distanz links und einer Distanz rechts. Die Richtung ist die Richtung der breitesten Bahnbreite, und die Distanzen geben an, wie breit die Bahn in dieser Richtung unter Vorgabe von *stol* ist.

Weitere Methoden

Wie bereits erwähnt ist die oben beschriebene Hermite-Chebyshev-Methode das zur Zeit bevorzugte Verfahren zur Ermittlung der optimalen Werkzeugorientierung in jedem Punkt eines Netzes auf der Freiformfläche. In dieser Methode wird für jeden Punkt derjenige Sturz- und Schwenkwinkel des Werkzeugs ermittelt, für den der Abstand der Punkte $P_l$ und $P_r$ zumindest approximativ maximal wird. Hierzu werden Gleichungen (5), (6) und (9) gelöst, was in sehr effizienter Weise zum gewünschten Resultat führt.

Steht ausreichend Rechenleistung zur Verfügung, sind jedoch auch andere, viel aufwendigere Lösungswege denkbar. So kann zum Beispiel für jeden Punkt der optimale Sturz- und Schwenkwinkel ermittelt werden, indem die beiden Winkel numerisch variiert werden und für jedes Winkelpaar berechnet wird, wie breit der Toleranzbereich bei richtiger Position des Werkzeugs ist, d.h. wie breit der Bereich ist, innerhalb dem der Abstand zwischen dem Werkzeug und der Freiformfläche innerhalb *Stol* bleibt. Dasjenige Winkelpaar, bei dem diese Breite maximal wird, liegt am nächsten beim Optimum.

**Bahnlegung**

Nach Wahl von *A* (welche der vier Lösungen soll benutzt werden?) können mit *D* die Berührbahnen des Werkzeuges auf dem Werkstück als B-Splines

$$\left(u(s), v(s)\right)$$

in der Parameterebene festgelegt werden:

$$B(s) := \psi\left(u(s), v(s)\right)$$

(vgl. Fig. 11). Damit möglichst grosse Bahnbreiten resultieren, soll *B* auf der Fläche möglichst senkrecht zu den Bahnabstandsrichtungen liegen. Zur Abarbeitung in der Steuerung gibt es zwei mögliche Vorgehensweisen (vgl. Fig. 12):

1. Im CAM-System werden auf den Werkzeugverfahrwegen punktweise Position und Orientierung des Werkzeuges und deren Ableitungen berechnet. Durch die Punkte werden Splines dritten oder höheren Grades gelegt. Es resultieren mindestens $C_2$-stetige Bahnen für die Position und Orientierung des Werkzeuges im Werkstückkoordinatensystem (WKS). In einem Postprozessor werden diese Splines in Achswertsplines umgewandelt. Diese Achswertsplines werden der Steuerung übergeben.
2. Die Fläche wird zusammen mit den Berührbahnen auf der Fläche sowie der Information, welche Lösung gewählt wird, der Steuerung übergeben. In der Steuerung werden punktweise optimale Werkzeugpositionen und -orientierungen berechnet. Diese werden punktweise in Achswerte und Ableitungen der Achswerte umgewandelt. Durch die Punkte werden Polynome dritten oder höheren Grades gelegt. Es resultieren mindestens $C_2$-stetige Achswert-

Polynome, die in der Steuerung verarbeitet werden.

## Patentansprüche

1. Verfahren zum abtragenden Bearbeiten der Oberfläche eines Werkstücks mit einem Werkzeug, wobei das Werkzeug in Bahnen (B) über das Werkstück geführt und dabei Material des Werkstücks, das in einen Wirkbereich (τ) des Werkzeugs gerät, abgetragen wird, um eine gewünschte Soll-Oberfläche (ψ) zu erzeugen, **dadurch gekennzeichnet, dass** sowohl Sturz- als auch Schwenkwinkel des Werkzeugs auf seinen Bahnen wiederholt eingestellt werden, um einen Toleranzbereich, definiert als ein zusammenhängender Bereich, innerhalb welchem der Abstand zwischen der Soll-Oberfläche und dem Wirkbereich des Werkzeugs in einem vorgegebenen Toleranzintervall liegt, zu maximieren, indem der Sturz- und der Schwenkwinkel ermittelt werden, indem der Wirkbereich (τ) rechnerisch an zwei Punkten ($P_0$,$P_2$) in Berührung mit der Soll-Oberfläche (ψ) des Werkstücks gebracht wird und sodann die Position von mindestens einem der Punkte variiert wird, wobei der Toleranzbereich maximiert wird, indem entweder
   mindestens einer der zwei Punkte ($P_0$, $P_2$) variiert wird, bis der Abstand zwischen den zwei Punkten maximal wird, oder indem
   mindestens einer der Punkte ($P_0$, $P_2$) variiert wird, bis die Breite des Toleranzbereichs maximal wird.

2. Verfahren nach Anspruch 1, **dadurch gekennzeichnet, dass** der Sturz- und der Schwenkwinkel derart eingestellt werden, dass das Werkzeug sich immer oberhalb der Soll-Oberfläche befindet.

3. Verfahren nach einem der vorangehenden Ansprüche, **dadurch gekennzeichnet, dass** mindestens einer der zwei Punkte ($P_0$, $P_2$) variiert wird, bis der Abstand zwischen den zwei Punkten maximal wird.

4. Verfahren nach einem der Ansprüche 1 oder 2, **dadurch gekennzeichnet, dass** mindestens einer der Punkte ($P_0$, $P_2$) variiert wird, bis die Breite des Toleranzbereichs maximal wird.

5. Verfahren nach einem der vorangehenden Ansprüche, **dadurch gekennzeichnet, dass** einer der zwei Punkte festgehalten und der andere variiert wird.

6. Verfahren nach einem der vorangehenden Ansprüche, **dadurch gekennzeichnet, dass** für eine Vielzahl von Punkten auf der Soll-Oberfläche der Toleranzbereich maximaler Breite bestimmt wird, dass für jeden Punkt eine Richtung bestimmt wird, die einem maximalen Durchmesser des Toleranzbereichs entspricht, und dass die Bahnen (B) im wesentlichen senkrecht zu diesen Richtungen gewählt werden.

7. Verfahren nach einem der vorangehenden Ansprüche, **dadurch gekennzeichnet, dass** der Abstand der Bahnen aufgrund der Breite des Toleranzbereichs gewählt wird.

8. Verfahren zum abtragenden Bearbeiten der Oberfläche eines Werkstücks mit einem Werkzeug, wobei das Werkzeug in Bahnen (B) über das Werkstück geführt und dabei Material des Werkstücks, das in einen Wirkbereich (τ) des Werkzeugs gerät, abgetragen wird, um eine gewünschte Soll-Oberfläche (ψ) zu erzeugen, **dadurch gekennzeichnet, dass** sowohl Sturz- als auch Schwenkwinkel des Werkzeugs auf seinen Bahnen wiederholt derart eingestellt werden, dass die Breite eines Toleranzbereichs, definiert als ein zusammenhängender Bereich, innerhalb welchem der Abstand zwischen der Soll-Oberfläche und dem Wirkbereich des Werkzeugs in einem vorgegebenen Toleranzintervall liegt, durch numerische Variation des Sturz- und Schwenkwinkels maximiert wird.

9. Verfahren zum abtragenden Bearbeiten der Oberfläche eines Werkstücks mit einem Werkzeug, wobei das Werkzeug in Bahnen (B) über das Werkstück geführt und dabei Material, das in einen Wirkbereich (τ) des Werkzeugs gerät, abgetragen wird um eine gewünschte Soll-Oberfläche (ψ) zu erzeugen, **dadurch gekennzeichnet, dass** sowohl Sturz- als auch Schwenkwinkel des Werkzeugs auf seinen Bahnen wiederholt derart eingestellt werden, indem für eine Vielzahl von Punkten auf den Bahnen für jeden Punkt eine in der Soll-Oberfläche liegende Anschmiegkurve (c(t)) ermittelt wird, welche dadurch definiert ist, dass deren Krümmung, Krümmungsableitung und Torsion im jeweiligen Punkt jenen einer Wirkkurve entsprechen, wobei die Wirkkurve die Menge jener Punkte auf dem Wirkbereich (τ) des Werkzeugs ist, die minimalen Abstand zur Soll-Oberfläche (ψ) besitzen.

10. Verfahren nach Anspruch 9, **dadurch gekennzeichnet, dass** die Wirkkurve ein Kreis ist.

## Claims

1. A method for processing the surface of a workpiece by removing material with a tool, wherein the tool is guided along paths (B) over the workpiece and during this process material of the workpiece which gets into a cutting range ($\tau$) of the tool is removed, for creating a desired surface ($\psi$), **characterised in that**, both inclination and tilting angle of the tool along its path are repeatedly adjusted for maximising an area of tolerance, which is defined as a continuous area, in which the distance between the desired surface and the cutting range of the tool are within a predefined tolerance interval, by determining the inclination and tilting angle, by computatively getting at two points ($P_0$, $P_2$) the cutting range ($\tau$) in contact with the desired surface ($\psi$) of the workpiece and then varying the position of at least one of the points, wherein the area of tolerance is maximised, either by
   varying at least one of the two points ($P_0$, $P_2$), until the distance between the two points is maximal or by
   varying at least one of the points ($P_0$, $P_2$) until the width of the area of tolerance is maximal.

2. The method of claim 1, **characterised in that** inclination and tilting angle are adjusted such that the tool is always above the desired surface.

3. A method according to one of the preceding claims, **characterised in that** at least one of the two points ($P_0$, $P_2$) is varied until the distance between the two points is maximal.

4. A method according to one of the claims 1 or 2, **characterised in that** at least one of the points ($P_0$, $P_2$) is varied until the width of the area of tolerance is maximal.

5. A method according to one of the preceding claims, **characterised in that** one of the two points is held fixed and the other is varied.

6. A method according to one of the preceding claims, **characterised in that** for a plurality of points on the desired surface the area of tolerance having a maximum width is determined, that for each point a direction is determined which corresponds to a maximum diameter of the area of tolerance and that the paths (B) are chosen substantially perpendicular to these directions.

7. A method according to one of the preceding claims, **characterised in that** the distance of the paths is chosen based on the width of the area of tolerance.

8. A method for processing the surface of a workpiece by removing material with a tool, wherein the tool is guided along paths (B) over the workpiece and during this process material of the workpiece which gets into a cutting range ($\tau$) of the tool is removed for creating a desired surface ($\psi$), **characterised in that** both inclination and tilting angle of the tool on its paths are repeatedly adjusted such that the width of an area of tolerance, defined as a continuous area, within which the distance between the desired surface and the cutting range of the tool are within a given interval of tolerance, is maximised by numerical variation of the inclination and tilting angle.

9. A method for processing the surface of a workpiece by removing material with a tool, wherein the tool is guided along paths (B) over the workpiece and during this process material which gets into a cutting range ($\tau$) of the tool is removed for creating a desired surface ($\psi$), **characterised in that** both inclination and tilt angle of the tool along its paths are repeatedly adjusted by determining for a plurality of points on the paths for each point a fitting curve (c(t)) in the desired surface, which is defined **in that** its curvature, derivative of curvature and torsion correspond in the respective point to those of a cutting curve, wherein the cutting curve is the set of those points on the cutting range ($\tau$) of the tool, which have minimum distance to the desired surface ($\psi$).

10. The method according to claim 9, **characterised in that** the cutting curve is a circle.

## Revendications

1. Procédé pour l'usinage par enlèvement de matière de la surface d'une pièce à usiner par un outil, l'outil étant déplacé le long de trajectoires (B) au-dessus de la pièce à usiner, dont le matériau qui se trouve dans un domaine d'action ($\tau$) de l'outil est enlevé afin d'obtenir une surface de consigne désirée ($\psi$), **caractérisé en ce que** tant l'angle de gîte que l'angle d'attaque de l'outil sont ajustés de façon répétée le long de sa trajectoire pour maximaliser par détermination des angles de gîte et d'attaque un domaine de tolérance défini comme un domaine continu à

l'intérieur duquel la distance entre la surface de consigne et le domaine d'action de l'outil reste à l'intérieur d'un intervalle de tolérance prédéterminé, cela étant obtenu par calcul en amenant le domaine d'action (T) en contact avec la surface de consigne (ψ) de la pièce à usiner en deux points ($P_0$, $P_2$) et en modifiant ensuite la position d'au moins un des points tout en maximant le domaine de tolérance, ce que l'on effectue

soit en déplaçant l'un des deux points ($P_0$, $P_2$) jusqu'à ce que la distance entre les deux points devienne maximale,

soit en déplaçant l'un des deux points ($P_0$, $P_2$) jusqu'à ce que la largeur du domaine de tolérance devienne maximale.

2. Procédé selon la revendication 1, **caractérisé en ce que** les angles de gîte et d'attaque sont choisis de manière à ce que l'outil se trouve toujours au-dessus de la surface de consigne.

3. Procédé selon une des revendications précédentes, **caractérisé en ce que** l'on déplace au moins un des points ($P_0$, $P_2$) jusqu'à ce que la distance entre les deux points devienne maximale.

4. Procédé selon une des revendications 1 ou 2, **caractérisé en ce que** l'on déplace au moins un des points ($P_0$, $P_2$) jusqu'à ce que la largeur du domaine de tolérance devienne maximale.

5. Procédé selon une des revendications précédentes, **caractérisé en ce que** l'un des deux points demeure fixe, et que l'on déplace l'autre.

6. Procédé selon une des revendications précédentes, **caractérisé en ce que** l'on détermine le domaine de tolérance de largeur maximale pour de nombreux points sur la surface de consigne et que l'on détermine pour chaque point une direction correspondant à un diamètre maximal du domaine de tolérance, et **en ce que** les trajectoires (B) sont choisies essentiellement perpendiculaires à ces directions.

7. Procédé selon une des revendications précédentes, **caractérisé en ce que** l'on choisit la distance entre les trajectoires en fonction de la largeur du domaine de tolérance.

8. Procédé pour l'usinage par enlèvement de matière de la surface d'une pièce à usiner par un outil, l'outil étant déplacé le long de trajectoires (B) au-dessus de la pièce à usiner, dont le matériau qui se trouve dans un domaine d'action (τ) de l'outil est enlevé afin d'obtenir une surface de consigne désirée (ψ), **caractérisé en ce que** tant t'angle de gîte que l'angle d'attaque de l'outil sont ajustés de façon répétée le long de sa trajectoire de manière à maximaliser, par variation numérique des angles de gîte et d'attaque, la largeur d'un domaine de tolérance défini comme un domaine continu à l'intérieur duquel la distance entre la surface de consigne et le domaine d'action de l'outil reste à l'intérieur d'un intervalle de tolérance prédéterminé.

9. Procédé pour l'usinage par enlèvement de matière de la surface d'une pièce à usiner par un outil, l'outil étant déplacé le long de trajectoires (B) au-dessus de la pièce à usiner, dont le matériau qui se trouve dans un domaine d'action (τ) de l'outil est enlevé afin d'obtenir une surface de consigne désirée (ψ), **caractérisé en ce que** tant t'angle de gîte que l'angle d'attaque de l'outil sont ajustés de façon répétée le long de sa trajectoire en déterminant pour chacun parmi de nombreux points situés sur les trajectoires une courbe osculatrice (c(t)) située sur la surface de consigne, cette courbe étant définie **en ce que** sa courbure, la dérivée de sa courbure et sa torsion au point en question correspondent à celles d'une courbe d'action représentée par l'ensemble des points du domaine d'action (τ) de l'outil situés à distance minimale de la surface de consigne (ψ).

10. Procédé selon la revendication 9, **caractérisé en ce que** la courbe d'action est un cercle.

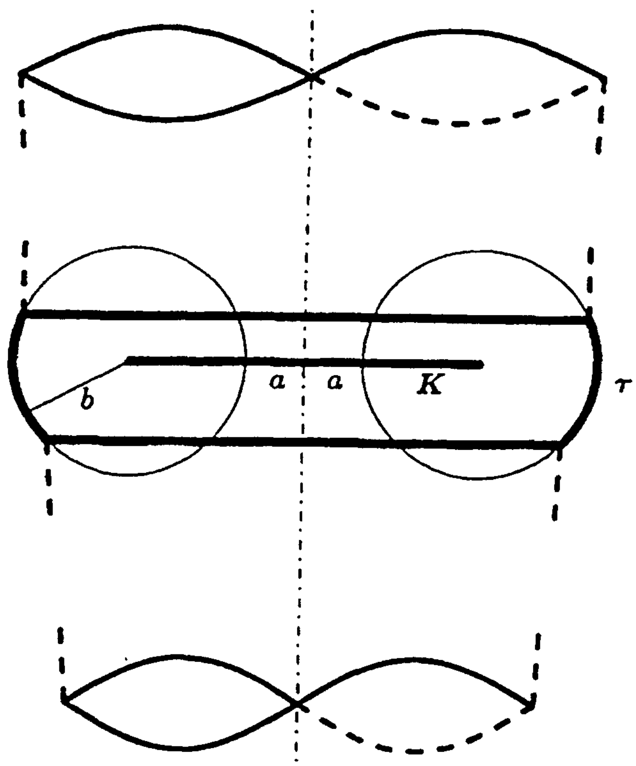


Fig. 1

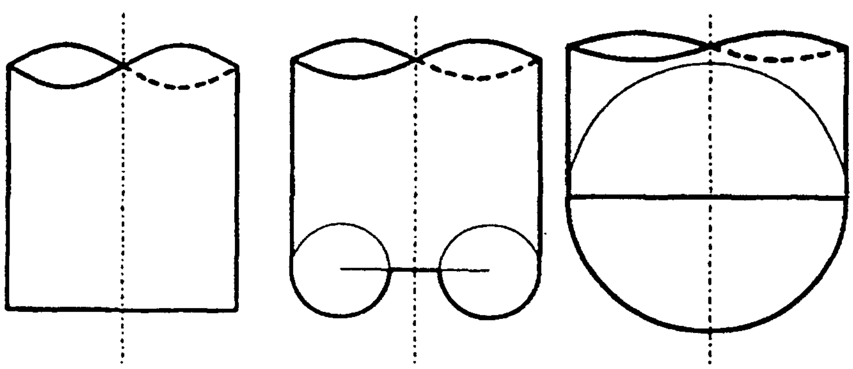

A B C

Fig. 2

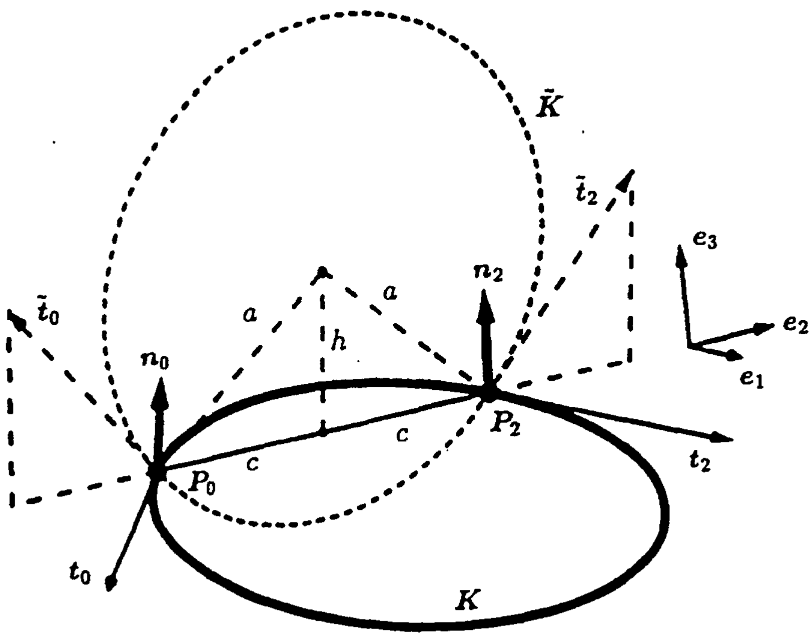


Fig. 3

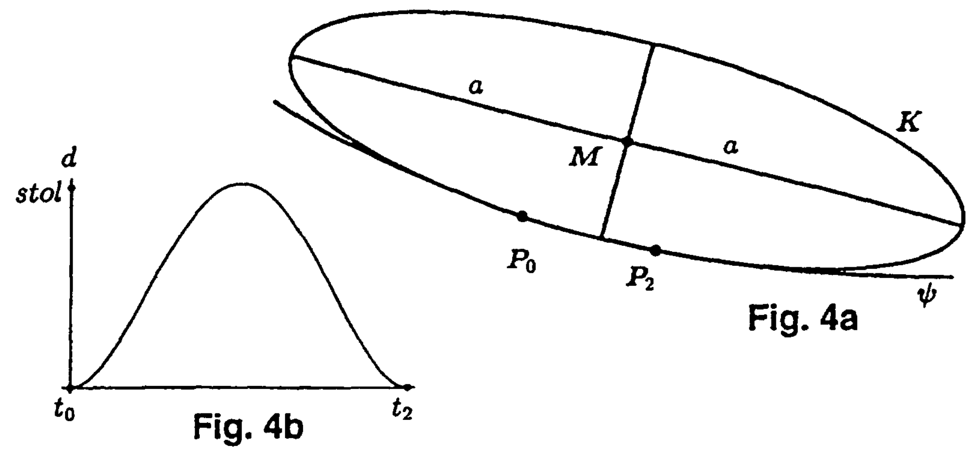


Fig. 4a

Fig. 4b

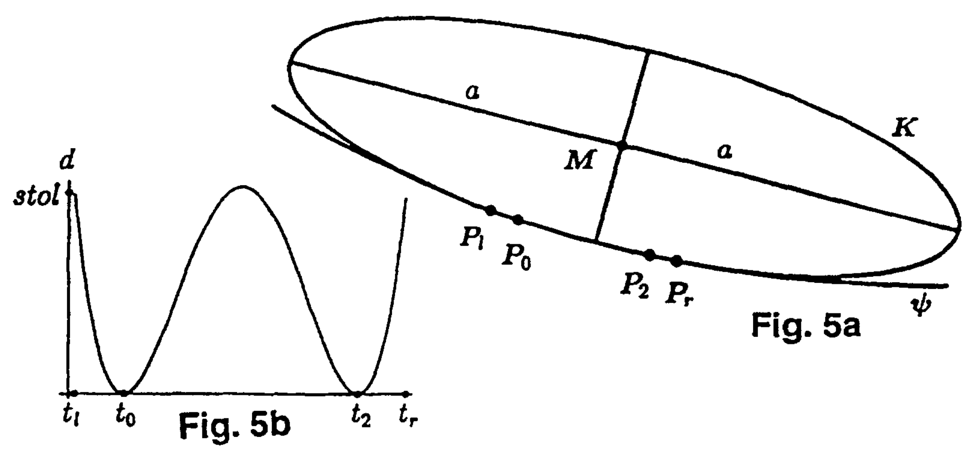


Fig. 5a

Fig. 5b

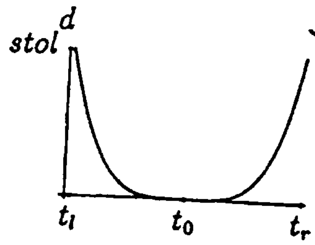


Fig. 6b

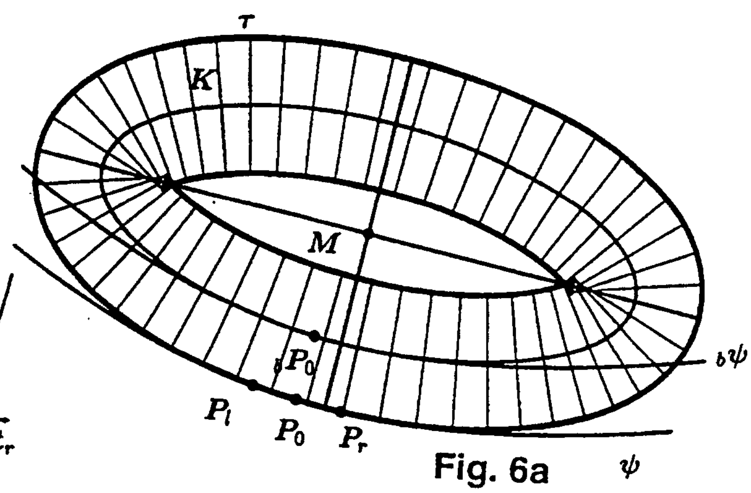


Fig. 6a

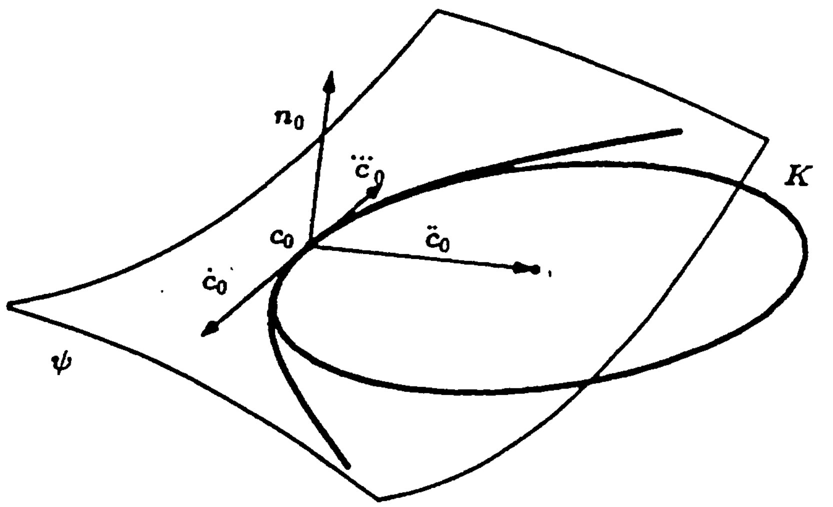


Fig. 7

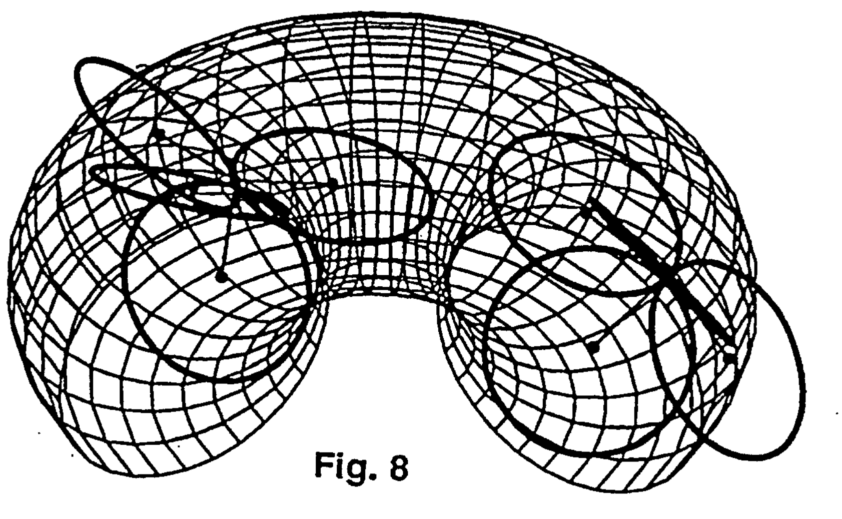

Fig. 8

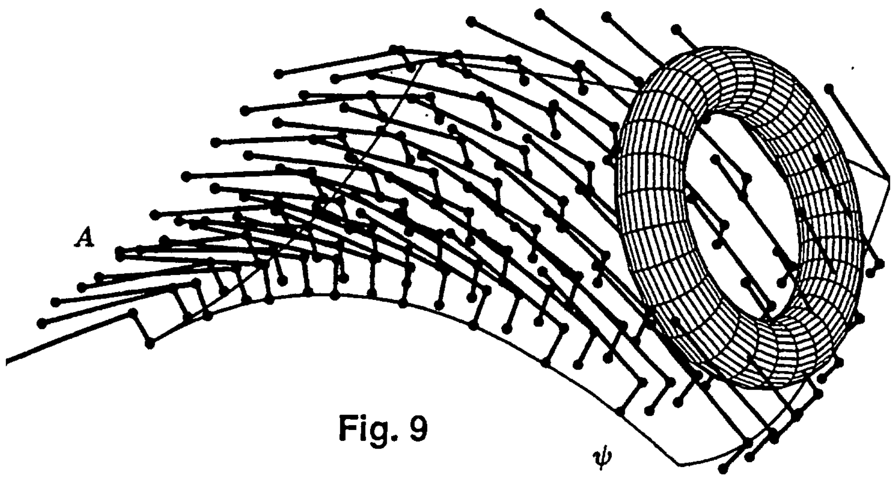


Fig. 9

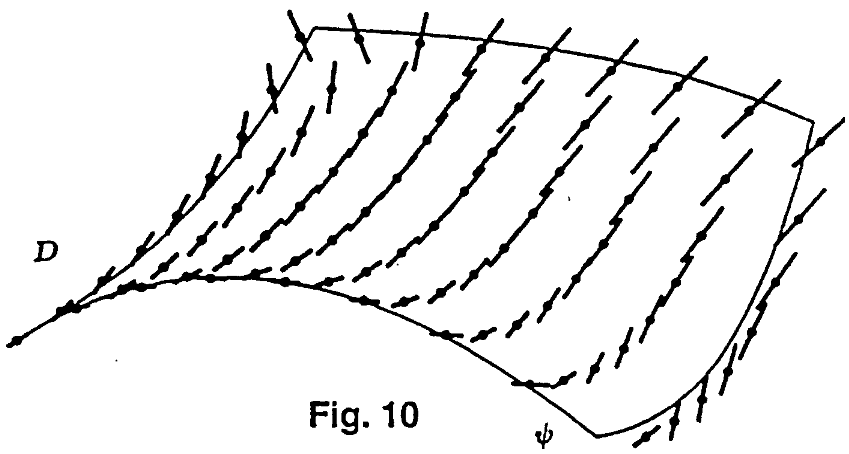


Fig. 10

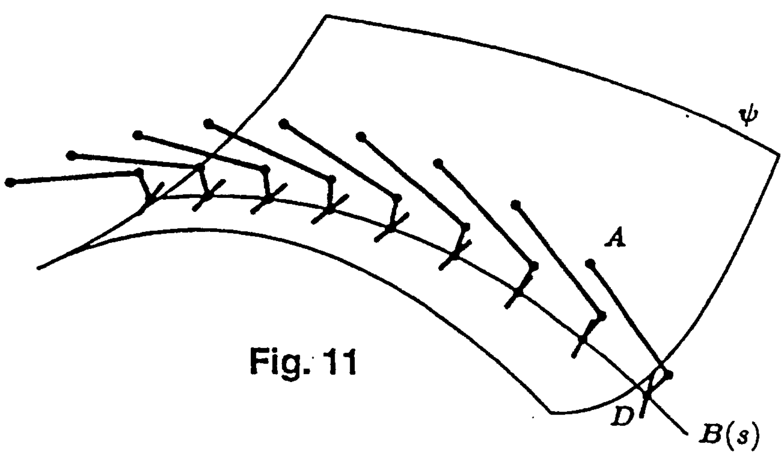


Fig. 11

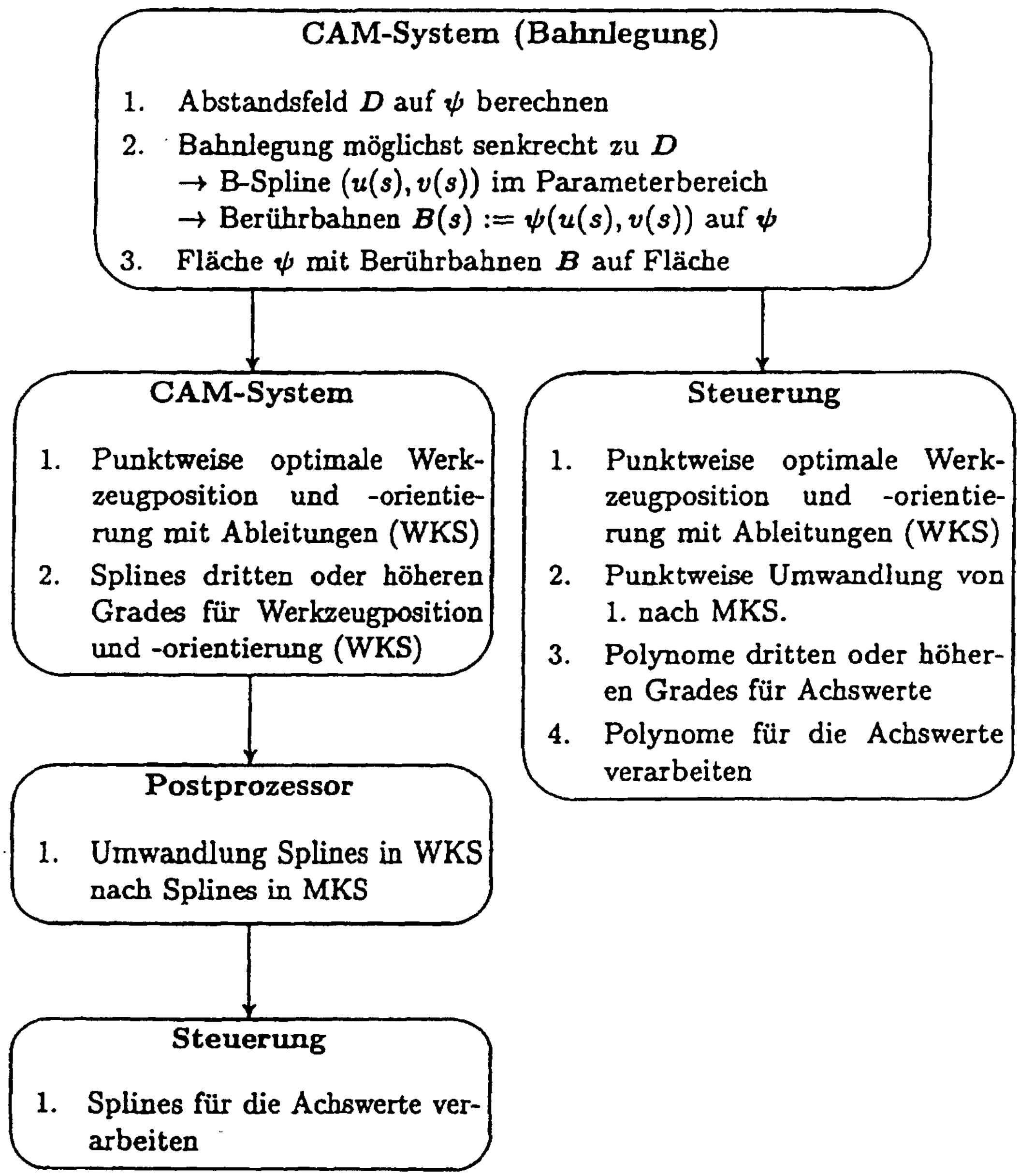
CAM-System (Bahnlegung)
1. Abstandsfeld $D$ auf $\psi$ berechnen
2. Bahnlegung möglichst senkrecht zu $D$
→ B-Spline $(u(s), v(s))$ im Parameterbereich
→ Berührbahnen $B(s) := \psi(u(s), v(s))$ auf $\psi$
3. Fläche $\psi$ mit Berührbahnen $B$ auf Fläche
CAM-System
1. Punktweise optimale Werkzeugposition und -orientierung mit Ableitungen (WKS)
2. Splines dritten oder höheren Grades für Werkzeugposition und -orientierung (WKS)
Steuerung
1. Punktweise optimale Werkzeugposition und -orientierung mit Ableitungen (WKS)
2. Punktweise Umwandlung von 1. nach MKS.
3. Polynome dritten oder höheren Grades für Achswerte
4. Polynome für die Achswerte verarbeiten
Postprozessor
1. Umwandlung Splines in WKS nach Splines in MKS
Steuerung
1. Splines für die Achswerte verarbeiten

Fig. 12

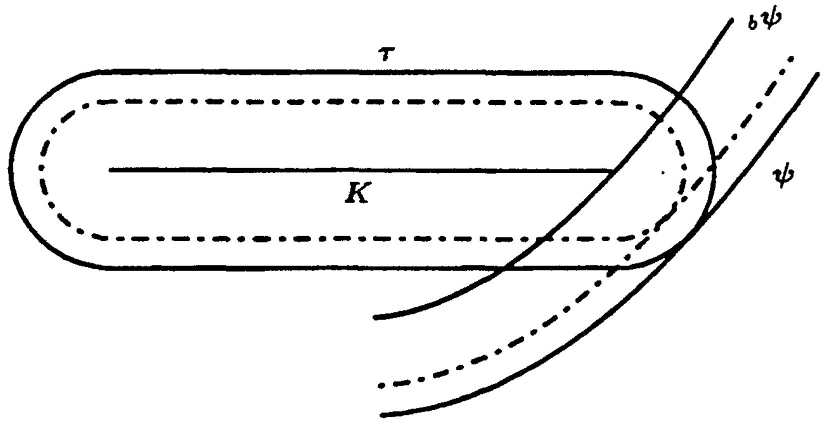


Fig. 13